# EUROPÄISCHE PATENTSCHRIFT

(11) **EP 0 751 310 B1**
(45) Veröffentlichungstag und Bekanntmachung des Hinweises auf die Patenterteilung: **29.04.1998**
(21) Anmeldenummer: 95109687.4
(22) Anmeldetag: 22.06.1995
(51) Int. Cl.: F16C 11/06

(54) **Kugelgelenk**
Ball joint
Articulation à rotule

(43) Veröffentlichungstag der Anmeldung: 02.01.1997
(73) Patentinhaber: TRW Fahrwerksysteme GmbH & Co. KG, 40547 Düsseldorf (DE)
(72) Erfinder: Dorr, Christoph, 40667 Meerbusch (DE)
(74) Vertreter: Stenger, Watzke & Ring Patentanwälte

(56) Entgegenhaltungen:
- EP-A- 0 612 926
- DE-A- 3 843 331

## Beschreibung

Die Erfindung betrifft ein Kugelgelenk mit einer an einem Kugelzapfen angeordneten Gelenkkugel, die verdreh- und kippbar in einer einseitig geschlossenen Kugelschale aus Kunststoff gelagert ist, die ihrerseits in einem Gehäuse, das ringförmig mit einer durchgehenden Bohrung für die Kugelschale ausgebildet ist, angeordnet und an ihrer dem Kugelzapfen zugewandten Öffnung durch einen zwischen Gehäuse und Kugelzapfen angeordneten Dichtungsbalg abgedichtet ist, dessen kugelseitiger Rand in axialer Richtung zwischen dem Gehäuse und einer zapfenseitigen Verlängerung der Kugelschale eingespannt ist.

Derartige Kugelgelenke, bei denen ein separater Spannring zur Befestigung des Dichtungsbalges am Gehäuse entfällt, sind bekannt. Sie sind preisgünstig herstellbar und werden bevorzugt an Kraftfahrzeugen eingesetzt. Bei einem solchen, aus der EP-A-0 612 926 bekannten, gattungsgemäßen Kugelgelenk ist die Kugelschale mit einem Pressitz im Gehäuse festgelegt. Das Gehäuse wird mit einem angeklebten oder angeschweißten Deckel verschlossen. Weiter ist es allgemein bekannt, daß der das Kugelgelenk abdichtende, zwischen Gehäuse und Kugelzapfen angeordnete Dichtungsbalg sowohl am Kugelzapfen als auch am Gehäuse durch jeweils einen Spannring festgelegt, werden kann. Außerdem ist aus der DE-A-3 843 331 ein gattungsähnliches Kugelgelenk bekannt, bei dem der Dichtungsbalg in einem zwischen dem Gehäuse und einer zapfenseitigen Verlängerung der Kugelschale gebildeten Nut festgelegt ist.

Der Erfindung liegt die **Aufgabe** zugrunde, ein Kugelgelenk der eingangs beschriebenen Art derart weiterzubilden, daß die Konstruktion und die Montage vereinfacht werden.

Die **Lösung** dieser Aufgabenstellung durch die Erfindung ist dadurch gekennzeichnet, daß die Kugelschale an ihrer geschlossenen Stirnseite eine Nut aufweist, mittels der sie durch Verstemmen des Gehäuses formschlüssig an diesem gehalten ist.

Gemäß einem weiteren Merkmal der Erfindung kann der Dichtungsbalg mit einem verdickten Rand in einer axialen Aufnahmenut der zapfenseitigen Verlängerung der Kugelschale angeordnet sein und an einer die Bohrung umgebenden ebenen Fläche des Gehäuses anliegen. Diese Weiterbildung hat den Vorteil, daß beim Einsetzen der auf die Gelenkkugel aufgesetzten Kugelschale in das Gehäuse der kugelseitige Rand des Dichtungsbalges selbsttätig am Gehäuse festgelegt und gleichzeitig zentriert wird, ohne daß das Gehäuse zu diesem Zweck speziell ausgestaltet werden muß. Damit entfällt eine Bearbeitung des Gehäuses für die Balgbefestigung.

Gemäß einem weiteren Merkmal der Erfindung weist die Kugelschale an ihrer äußeren zylindrischen Mantelfläche am zapfenseitigen Ende einen Absatz auf, durch den sie in Richtung ihrer geschlossenen Seite in einer axial definierten Endlage festgelegt ist. Um Maßtoleranzen bezüglich der Höhe des Gehäuses durch lokale plastische Deformation des Kugelschalenwerkstoffes auszugleichen, kann dieser Absatz als schräge Ringfläche ausgebildet sein.

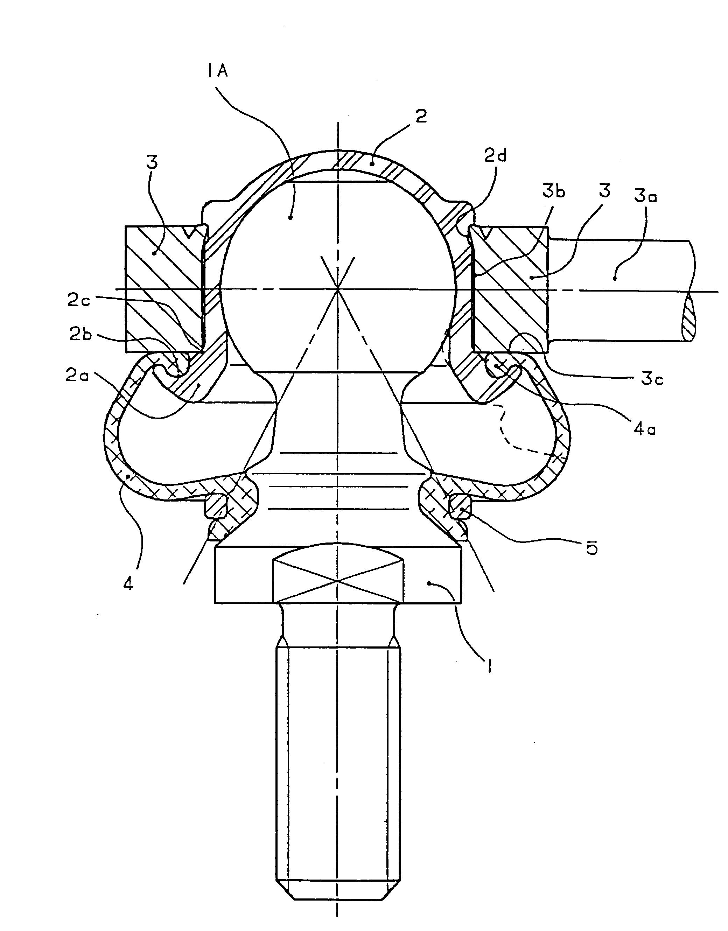

Auf der Zeichnung ist ein Ausführungsbeispiel des erfindungsgemäßen Kugelgelenks in einem Längsschnitt dargestellt.

Das Kugelgelenk umfaßt eine an einem Kugelzapfen 1 angeordnete, vorzugsweise einstückig mit diesem ausgebildete Gelenkkugel 1a, die mittels einer einseitig geschlossenen Kugelschale 2 aus Kunststoff verdreh- und kippbar in einem Gehäuse 3 gelagert ist, das beispielsweise am Ende einer Strebe 3a ausgebildet ist. Zwischen dem Gehäuse 3 und dem Kugelzapfen 1 ist ein Dichtungsbalg 4 zur Abdichtung der Lagerflächen des Kugelgelenks angeordnet.

Um ohne spezielle Bearbeitung des Gehäuses 3 den kugelseitigen Rand 4a des Dichtungsbalges 4 am Gehäuse 3 festzulegen, ist die Kugelschale 2 mit einer zapfenseitigen Verlängerung 2a versehen, die eine ringförmige Aufnahmenut 2b für den verstärkten Rand 4a des Dichtungsbalges 4 aufweist und diesen Rand 4a beim Einsetzen der Kugelschale 2 in das Gehäuse 3 in axialer Richtung an eine zapfenseitige ebene Fläche 3c des Gehäuses 3 andrückt und auf diese Weise einspannt. Die Verlängerung 2a der Kugelschale 2 kann zugleich als Anschlag zur Begrenzung des Winkelausschlages des Kugelzapfens 1 im Verhältnis zum Gehäuse 3 ausgebildet werden. Der maximale Winkelausschlag ist in der Zeichnung eingezeichnet.

Durch die in axialer Richtung erfolgende Einspannung des kugelseitigen Randes 4a des Dichtungsbalges 4 zwischen einer Fläche des Gehäuses 3 und der Verlängerung 2a der Kugelschale 2 entfällt eine spezielle Ausgestaltung des Gehäuses 3 für die Befestigung des Dichtungsbalges 4.

Beim Ausführungsbeispiel ist das Gehäuse 3 ringförmig mit einer durchgehenden Bohrung 3b, die beim Ausführungsbeispiel einen konstanten Durchmesser aufweist, zur Aufnahme der zylinderförmigen Mantelfläche der Kugelschale 2 ausgebildet. Um die Kugelschale 2 durch Formschluß im Gehäuse 3 festzulegen, kann das Gehäuse 3 im Bereich der die geschlossene Seite der Kugelschale 2 umgebenden Oberfläche verstemmt werden, wobei der so verformte Gehäusewerkstoff in eine Nut 2d in der zylindrischen Mantelfläche der Kugelschale gedrängt wird, wie dies in der Zeichnung dargestellt ist. Auf diese Weise ergibt sich ein Formschluß zwischen der Kugelschale 2 und der durch das Verstemmen verformten Teile des Gehäuses 3.

Die Kugelschale 2 liegt mit einem ringförmigen Absatz 2c an der Unterseite des Gehäuses 3 an und schafft somit eine definierte Endlage der Kugelschale 2. Zum Toleranzausgleich kann diese Fläche auch als schräge Ringfläche ausgebildet sein.

Wie die Zeichnung weiterhin erkennen läßt, ergibt sich insgesamt ein konstruktiv sehr einfaches und damit preiswert herstellbares sowie einfach zu montierendes Kugelgelenk, dessen Dichtungsbalg 4 mit seinem zapfenseitigen Ende durch einen Spannring 5 am Kugelzapfen 1 festgelegt wird.

### Bezugszeichenliste:

- 1: Kugelzapfen
- 1a: Gelenkkugel
- 2: Kugelschale
- 2a: Verlängerung
- 2b: Aufnahmenut
- 2c: Absatz
- 2d: Nut
- 3: Gehäuse
- 3a: Strebe
- 3b: Bohrung
- 3c: Fläche
- 4: Dichtungsbalg
- 4a: Rand
- 5: Spannring

## Patentansprüche

1. Kugelgelenk mit einer an einem Kugelzapfen (1) angeordneten Gelenkkugel (1a), die verdreh- und kippbar in einer einseitig geschlossenen Kugelschale (2) aus Kunststoff gelagert ist, die ihrerseits in einem Gehäuse (3), das ringförmig mit einer durchgehenden Bohrung (3b) für die Kugelschale (2) ausgebildet ist, angeordnet und an ihrer dem Kugelzapfen (1) zugewandten Öffnung durch einen zwischen Gehäuse (3) und Kugelzapfen (1) angeordneten Dichtungsbalg (4) abgedichtet ist, dessen kugelseitiger Rand (4a) in axialer Richtung zwischen dem Gehäuse (3) und einer zapfenseitigen Verlängerung (2a) der Kugelschale (2) eingespannt ist,
**dadurch gekennzeichnet,**
daß die Kugelschale (2) an ihrer geschlossenen Stirnseite eine Nut (2d) aufweist, mittels der sie durch Verstemmen des Gehäuses (3) formschlüssig an diesem gehalten ist.

2. Kugelgelenk nach Anspruch 1, dadurch gekennzeichnet, daß der Dichtungsbalg (4) mit einem verdickten Rand (4a) in einer axialen Aufnahmenut (2b) der zapfenseitigen Verlängerung (2a) der Kugelschale (2) angeordnet ist und an einer die Bohrung (3) umgebenden ebenen Fläche (3c) des Gehäuses (3) anliegt.

3. Kugelgelenk nach Anspruch 1, dadurch gekennzeichnet, daß die Kugelschale (2) an ihrer äußeren zylindrischen Mantelfläche am zapfenseitigen Ende einen Absatz (2c) aufweist, durch den sie in Richtung ihrer geschlossenen Seite in einer axial definierten Endlage festgelegt ist.

4. Kugelgelenk nach Anspruch 3, dadurch gekennzeichnet, daß der Absatz (2c) der Kugelschale (2) als schräge Ringfläche ausgebildet ist.

## Claims

1. Ball joint having a joint ball (1a), which is disposed on a ball journal (1) and supported in a rotatable and tiltable manner in a ball socket (2) made of plastic material and closed at one side, which in turn is disposed in a housing (3), which is of an annular construction with a through-bore (3b) for the ball socket (2), and is sealed off at its opening facing the ball journal (1) by sealing bellows (4), which are disposed between housing (3) and ball journal (1) and the ball-side edge (4a) of which is clamped in an axial direction between the housing (3) and a journal-side extension (2a) of the ball socket (2),
characterized in
that the ball socket (2) at its closed end has a groove (2d), by means of which it is held as a result of caulking of the housing (3) positively at said groove.

2. Ball joint according to claim 1, characterized in that the sealing bellows (4) are disposed with a thickened edge (4a) in an axial receiving groove (2b) of the journal-side extension (2a) of the ball socket (2) and lie against a flat surface (3c) of the housing (3) surrounding the bore (3b).

3. Ball joint according to claim 1, characterized in that the ball socket (2) at its outer cylindrical lateral surface has at the journal end a shoulder (2c), by means of which it is fixed in the direction of its closed side in an axially defined end position.

4. Ball joint according to claim 3, characterized in that the shoulder (2c) of the ball socket (2) takes the form of an oblique annular surface.

## Revendications

1. Articulation à rotule, avec une rotule d'articulation (1a), qui est disposée sur un pivot à rotule (1), et qui est montée de façon à pouvoir tourner et basculer dans une cuvette sphérique (2), en matière plastique, fermée d'un côté, qui est disposée de son côté dans un boîtier (3), qui est constitué sous une forme annulaire avec un alésage (3b), qui va de bout en bout, pour la cuvette sphérique (2), laquelle cuvette est rendue étanche sur son ouverture, tournée vers le pivot à rotule (1), par un soufflet d'étanchéité (4), disposé entre le boîtier (3) et le pivot à rotule (1), soufflet d'étanchéité (4) dont le bord (4a), qui se trouve du côté de la rotule, est encastré dans le sens axial entre le boîtier (3) et un prolongement (2a), situé du côté du pivot, de la cuvette sphérique (2),
caractérisée en ce que
la cuvette sphérique (2) présente sur sa face frontale fermée une rainure (2d), au moyen de laquelle elle est maintenue par le matage du boîtier (3) sur celui-ci par coopération de formes.

2. Articulation à rotule selon la revendication 1, caractérisée en ce que le soufflet d'étanchéité (4) est disposé avec un bord épaissi (4a) dans une rainure axiale de réception (2b) du prolongement (2a), qui est situé du côté du pivot, de la cuvette sphérique (2) et repose sur une surface plane (3c) du boîtier (3), qui entoure l'alésage (3b).

3. Articulation à rotule selon la revendication 1, caractérisée en ce que la cuvette sphérique (2) présente, sur sa surface enveloppe cylindrique extérieure à l'extrémité située du côté du pivot, un appendice (2c), au moyen duquel elle est fixée en direction de son côté fermé dans une position finale axialement définie.

4. Articulation à rotule selon la revendication 3, caractérisée en ce que l'appendice (2c) de la cuvette sphérique (2) est constitué sous la forme d'une surface annulaire oblique.
